# EUROPÄISCHE PATENTSCHRIFT

(11) **EP 3 443 606 B1**
(45) Veröffentlichungstag und Bekanntmachung des Hinweises auf die Patenterteilung: **11.10.2023**
(21) Anmeldenummer: 17717687.2
(22) Anmeldetag: 12.04.2017
(51) Int. Cl.: H01M 4/485, H01M 4/525, H01M 4/58, H01M 4/587, H01M 10/0525, H01M 10/0567, H01M 10/0568, H01M 4/38

(54) **ELEKTROLYT FÜR WIEDERAUFLADBARE ELEKTROCHEMISCHE BATTERIEZELLEN**
ELECTROLYTE FOR RECHARGEABLE ELECTROCHEMICAL BATTERIES
ÉLECTROLYTE POUR BATTERIE ÉLECTROCHIMIQUE RECHARGEABLE

(30) Priorität: 14.04.2016 DE 102016106947
(43) Veröffentlichungstag der Anmeldung: 20.02.2019
(73) Patentinhaber: HPB Liquid Electrolyte UG (haftungsbeschränkt), 53227 Bonn (DE)
(72) Erfinder: HAMBITZER, Günther, 53113 Bonn (DE)
(74) Vertreter: Keenway Patentanwälte Neumann Heine Taruttis
(86) Internationale Anmeldenummer: PCT/EP2017/058820
(87) Internationale Veröffentlichungsnummer: WO 2017/178543

(56) Entgegenhaltungen:
- EP-A1- 1 923 934
- US-A- 4 362 794
- US-A1- 2010 283 429

## Beschreibung

Die Erfindung betrifft einen Elektrolyten für eine nichtwässrige wiederaufladbare elektrochemische Batteriezelle mit einer positiven und einer negativen Elektrode. Der Elektrolyt ist im Wesentlichen frei von Thionylchlorid.

Wiederaufladbare Batteriezellen sind auf vielen technischen Gebieten von großer Bedeutung. Vielfach werden sie für mobile Anwendungen eingesetzt, wie beispielsweise Mobiltelefone, Notebooks und Elektrofahrzeuge.

Daneben gibt es einen großen Bedarf an Batteriezellen für stationäre Anwendungen, wie Netzstabilisierung, Netzpufferung und dezentrale Energieversorgung.

Es besteht ein hohes Bedürfnis nach verbesserten wiederaufladbaren Batteriezellen, die insbesondere folgende Anforderungen erfüllen:
- Sicherheit durch Nichtbrennbarkeit;
- Langlebigkeit, d.h. hohe kalendarische Lebensdauer;
- hohe Zyklen-Lebensdauer, d.h. eine sehr hohe Zahl nutzbarer Lade- und Entladezyklen, auch bei hohen entnehmbaren Strömen, d.h. bei hoher Leistungsdichte;
- hoher Energiewirkungsgrad über die gesamte Lebensdauer;
- sehr gute elektrische Leistungsdaten, insbesondere hohe spezifische Energie (Wh/kg) bzw.
- hohe Energiedichte (Wh/l) bei gleichzeitig hoher Leistungsdichte (W/l);
- möglichst niedrige Herstellungskosten, d.h. bevorzugte Verwendung kostengünstiger und gut verfügbarer Materialien; und
- niedrige Kosten pro aus der Batteriezelle entnommener Kilowattstunde.

Bekannt sind wiederaufladbare Batteriezellen, die, insbesondere zum Erreichen der Nichtbrennbarkeit, schwefeldioxidhaltige Elektrolyte enthalten. Derartige Batteriezellen sind unter anderem bekannt aus der WO2015/067795 und der WO2005031908, in der Lithiumkobaltoxid beziehungsweise Lithiumeisenphosphat als aktives Metall vorgeschlagen ist. Dabei wird insbesondere ein aus Lithiumtetrachloroaluminat (LiAlCl₄) und Schwefeldioxid (SO₂) gebildetes Solvat (LiAlCl₄ × n SO₂) als Elektrolyt verwendet, wobei bei n = 1,5 der Dampfdruck des SO₂ unter 0,1 Bar und bei n>=4,5 über 2 Bar liegt. Derartige Elektrolyte können in herkömmlicher Weise aus Lithiumchlorid, Aluminiumchlorid und Schwefeldioxid hergestellt werden. Zugehörige Herstellungsverfahren erfordern Trockenheit des erhaltenen Elektrolyten. Dies erfordert insbesondere aufwendige Verfahren zur Trocknung von bei der Herstellung beteiligten Stoffen, insbesondere des stark hygroskopischen Lithiumchlorids oder von Mischungen bzw. Schmelzen von Lithiumchlorid und Aluminiumchlorid.

In einem SO₂-haltigen Elektrolyten aus Lithiumtetrachloroaluminat und Schwefeldioxid werden Elektrodenpotentiale gegen metallisches Lithium (vs. Li/Li+) gemessen, welches in den Elektrolyten eintaucht.

Bei derartigen Batteriezellen mit einem SO₂-haltigen Elektrolyten findet auf der Oberfläche einer negativen Elektrode, also beispielsweise auf der Oberfläche von Graphit, eine Reduktion von Schwefeldioxid (des Elektrolyten) zu Lithiumdithionit bei Potentialen von kleiner gleich 3V vs. Li/Li+ statt. Bei dieser Reaktion bildet sich mindestens eine Monolage von Lithiumdithionit als Deckschicht auf der Oberfläche der negativen Elektrode nach folgender Formel und für <= 3,0 Volt vs. Li/Li+ aus:

2 Li⁺ + 2e⁻ + 2 SO₂ ⇔ Li₂S₂O₄ (Gl. I)

Eine solche Deckschicht aus Lithiumdithionit ist stabil bis in die Lithiumabscheidung. Wird jedoch ein Lithiumdithionitmolekül dieser Schicht umgesetzt, so bildet sich ein solches auf der Oberfläche der negativen Elektrode sofort nach, solange das Potential der negativen Elektrode kleiner gleich 3,0 Volt vs. Li/Li+ ist. Wird das Potential einer solchen Elektrode, auf der mindestens eine Monolage der Deckschicht aus Lithiumdithionit haftet, in einem SO₂-haltigen Elektrolyten konstant auf einem Potential unterhalb von 3,0 Volt gehalten, beispielsweise durch eine entsprechend angeschlossene Vorrichtung wie beispielsweise einen Potentiostaten, so lässt sich ein abfallender Strom beobachten. Dieser abfallende Strom entspricht der Selbstentladung der Graphitelektrode. Bei niedriger Temperatur und einem Elektrolyten mit höherem SO₂-Gehalt ist dieser Selbstentladestrom kleiner als bei höherer Temperatur und geringerem SO₂-Gehalt. Obwohl Lithiumdithionit auf der Oberfläche der negativen Elektrode ein stabiles Molekül ist, zeigt sich mit dieser Selbstentladereaktion, dass das Lithiumdithionit chemisch umgesetzt wird und anschließend eine aus der Potentiallage herleitbare Neubildung des Lithiumdithionits stattfindet, wobei Elektrolyt verbraucht wird. Weiterhin wurde gefunden, dass ein saurer, mit einem stöchiometrischen Überschuss an Aluminiumchlorid hergestellter Elektrolyt den Selbstentladestrom der hier beispielhaft genannten Graphitelektrode erhöht. Weiterhin wurde gefunden, dass im Potentialbereich von unterhalb von 4 Volt vs. Li/Li+ die Umsetzung von Lithiumdithionit im Sinne einer Selbstentladereaktion nur nach einer einzigen Reaktionsfolge stattfindet. Diese Reaktionsfolge startet mit der Autodissoziation des gelösten Leitsalzes, welche in nachfolgender Reaktionsgleichung schematisch und am Beispiel des Solvats LiAlCl₄ × 2 SO₂ gezeigt ist:

(Li⁺ x 2 SO₂) + AlCl₄⁻ ⇔ LiCl + AlCl₃ + 2 SO₂ (Gl. II)

Gl. II drückt aus, dass das kleine, stark solvatisierte Lithiumion mit einem Chlorid des Tetrachloroaluminatanions unter Freisetzung von Schwefeldioxid zu gelöstem Aluminiumchlorid und festem Lithiumchlorid reagiert. Das Lithiumchlorid fällt dabei aus. Das Gleichgewicht liegt unter Normalbedingungen nahezu vollständig auf der linken Seite. Temperaturerhöhung und SO₂-Abnahme können das Gleichgewicht zur rechten Seite verschieben.

Weiterhin wurde gefunden, dass das Lithiumdithionit mit dem Aluminiumchlorid weiter reagiert gemäß der Formel

2 Li₂S₂O₄ + AlCl₃ -> Li₂S₂O₃ + 2 SO₂ + Li⁺ + AlOCl₂⁻ + LiCl (Gl. III)

und weiter über das Thiosulfat LiS₂O₃ gemäß

2 Li₂S₂O₃ + Li⁺ + AlCl₄⁻ ⇔ S + SO₂ + Li⁺ + AlOCl₂⁻ + 2 LiCl (Gl. IIIa)

zu Schwefel, Schwefeldioxid, gelösten Lithiumionen und Aluminiumoxichloriden sowie Lithiumchlorid, wobei das Lithiumchlorid ausfällt.

Weiterhin wurde gefunden, dass der gebildete Schwefel bei den an der negativen Elektrode üblichen Potentialen von unter ca. 2,0 Volt vs. Li/Li+ weiter zu Lithiumsulfid reduziert wird. Die Gesamtbruttoreaktion ist dann

6 Li⁺ + 6 e⁻ + 1 SO₂ + 2 Li⁺ + 2 AlCl₄⁻ ⇔ Li₂S + 2 Li⁺ + 2 AlOCl₂⁻ + 4 LiCl (Gl. IV)

Bei dieser Reaktion ist der Ladungsverbrauch durch Neubildung von Lithiumdithionit nicht formelmäßig berücksichtigt.

Durch die Umsetzung von Tetrachloroaluminatanionen gemäß der durch Gl. II und der weiteren beschriebenen Reaktionen wird Elektrolyt verbraucht. Um sicherzustellen, dass über die Lebensdauer einer solchen herkömmlichen Batteriezelle ausreichend Elektrolyt in der Batteriezelle vorhanden ist, wird eine solche herkömmliche Batteriezelle initial mit einer entsprechend großen Menge an Elektrolyt befüllt.

Weiterhin soll der Elektrolyt auch keine Substanz aufweisen, welche die Umsetzung von Lithiumdithionit bewirkt oder fördert und damit wegen der Neubildung des Lithiumdithionits und dem damit einhergehenden Verbrauch von Lithium die Kapazität der Batteriezelle verringert. Somit soll der Elektrolyt insbesondere kein Chlor oder chorfreisetzende Lösungsmittel wie Thionyl- oder Sulfurylchlorid aufweisen.

Insbesondere bewirkt Thionylchlorid die Entstehung einer passivierenden und mit der Zeit anwachsenden Deckschicht aus Lithiumchlorid auf der negativen Elektrode, welche jedenfalls der gewünschten Bildung der Lithiumdithionitschicht entgegen wirkt. Der Elektrolyt gemäß Anspruch 1 ist daher im Wesentlichen frei von Thionylchlorid.

Die oben beschriebene Selbstentladereaktion bewirkt, dass Batteriezellen mit bekannten SO₂-haltigen Elektrolyten bereits ab dem ersten Ladezyklus einem sehr hohen Kapazitätsverlust unterliegen. In solchen herkömmlichen Batteriezellen wird bei der Produktion aufgrund dieser Reaktion und des damit einhergehenden Verbrauchs an Lithiumionen bzw. Ladungsmenge in der Regel mehr aktive positive Masse, üblicherweise die doppelte Menge, eingebracht. Die Selbstentladereaktion führt dazu, dass sich die Kapazität einer solchen herkömmlichen Zelle schon in den ersten Zyklen nahezu halbiert. Aus diesem Grunde werden derartige Batteriezellen häufig vor dem Inverkehrbringen gezykelt, d.h. geladen und entladen, sodass die vorgezykelten Batteriezellen den großen Kapazitätsabfall nicht mehr aufweisen. Die Kapazität solcher vorgezykelten Zellen wird häufig als 100% definiert. In den weiteren Lade- und Entladezyklen fällt die Kapazität dann langsamer bis auf ca. 30%.

Ausgehend von diesen Nachteilen des Standes der Technik liegt der Erfindung das Problem zugrunde, einen Elektrolyten für eine Batteriezelle zur Verfügung zu stellen, der die im Zusammenhang mit dem Stand der Technik beschriebenen Probleme löst oder zumindest lindert.

Erfindungsgemäß wird dies durch die in den unabhängigen Ansprüchen definierten Gegenstände erreicht, wobei bevorzugte Ausführungsformen in den abhängigen Ansprüchen angegeben sind.

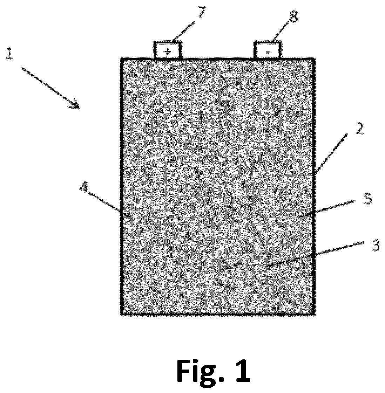

Figur 1 zeigt ein allgemeines Schema einer wiederaufladbaren Batterie 1 mit einem Gehäuse 2 und mindestens einer Batteriezelle 3, die eine positive Elektrode 4 und eine negative Elektrode 5 aufweist. Die Elektroden 4, 5 sind dabei über Ableitelemente gegebenenfalls über in der Batterietechnik übliche Elektrodenanschlüsse mit Anschlusskontakten 7, 8 verbunden, über die die Batterie letztlich geladen bzw. entladen werden kann.

Als aktive positive Massen werden bevorzugt Lithiummetalloxide, wie LiCoO₂, LiNiFeCoO₂ oder Li₃V₃O₈ oder alternativ Lithiummetallphosphate, wie LiFePO₄ eingesetzt. Die aktive negative Masse kann bevorzugt Graphit, eine andere Kohlenstoffart, Lithiumtitanoxid (Li₄Ti₅O₁₂, LTO) oder Silizium (Si) sein.

In der Batterie 1 wird ein schwefeldioxidhaltiger Elektrolyt verwendet, der zumindest ein erstes Leitsalz mit der stöchiometrischen Formel K(ASX₂)ₚ umfasst. Dabei steht die Abkürzung K für ein Kation aus der Gruppe der Alkalimetalle (insbesondere Li, Na, K, Rb, Cs) oder der Erdalkalimetalle (insbesondere Be, Mg, Ca, Sr, Ba) oder der Zinkgruppe (d.h. der zwölften Gruppe des Periodensystems, insbesondere Zn, Cd, Hg). In dem Fall, dass K aus der Gruppe der Alkalimetalle gewählt ist, ist p=1. In dem Fall, dass K aus der Gruppe der Erdalkalimetalle oder aus der Zinkgruppe gewählt ist, ist p=2. Die Abkürzung A steht für ein Element aus der dritten Hauptgruppe des Periodensystems, insbesondere Bor, Aluminium, Gallium, Indium, Thallium, und die Abkürzung X für ein Halogen, insbesondere Fluor, Chlor, Brom, Jod. S steht für Schwefel. Es ist bevorzugt, dass K für Li steht. Besonders bevorzugt ist es, dass das erste Leitsalz die stöchiometrische Formel LiAlSCl₂ hat, d.h. das erste Leitsalz ist bevorzugt Lithiumsulfodichloroaluminat.

Der erfindungsgemäße Elektrolyt enthält das in Schwefeldioxid gelöste erste Leitsalz als "SO₂-haltigen" Elektrolyten. Mit diesem Begriff wird hier ein Elektrolyt bezeichnet, der Schwefeldioxid nicht als Zusatz in geringer Konzentration enthält, sondern bei dem die Beweglichkeit der Ionen des ersten Leitsalzes, das in dem Elektrolyten enthalten ist und den Ladungstransport bewirkt, zumindest teilweise durch das SO₂ gewährleistet ist.

Ein Vorteil dieses nichtwässrigen anorganischen SO₂-haltigen Elektrolyten ist, dass er - im Gegensatz zu den organischen Elektrolytlösungen der in der Praxis gebräuchlichen Lithium-Ionen-Zellen - nicht brennen kann. Die bekannten Sicherheitsrisiken von Lithium-Ionen-Zellen werden insbesondere durch deren organische Elektrolytlösung verursacht. Wenn eine Lithium-Ionen-Zelle Feuer fängt oder sogar explodiert, bildet das organische Lösungsmittel der Elektrolytlösung das brennbare Material. Ein erfindungsgemäßer Elektrolyt ist vorzugsweise im Wesentlichen frei von organischen Materialien, wobei "im Wesentlichen" dahingehend zu verstehen ist, dass die Menge eventuell vorhandener organischer Materialien so gering ist, dass sie keinerlei Sicherheitsrisiko darstellen.

Es hat sich als günstig erwiesen, dass der erfindungsgemäße Elektrolyt im Wesentlichen frei von Substanzen ist, die die gewünschte Lithiumdithionit-Schicht angreifen, auflösen oder in sonstiger Weise abbauen oder beschädigen. Der Ausdruck "im Wesentlichen frei" weist dabei darauf hin, dass die Substanz höchstens in einer so geringen Menge vorliegt, dass sie die Lithiumdithionit-Schicht nicht abbaut/schädigt. Beispiele solcher Substanzen, die nicht vorliegen sollen, sind Oxidationsmittel, wie Chlor, Thionylchlorid und Sulfurylchlorid. Der vorgeschlagene Elektrolyt ist daher im Wesentlichen zumindest frei von Thionylchlorid.

Der erfindungsgemäße Elektrolyt weist das in SO₂ gelöste erste Leitsalz der vorstehend näher beschriebenen Formel K(ASX₂)ₚ auf. Dabei kann SO₂ in möglichst reiner Form verwendet werden, d.h. mit möglichst geringen Mengen von Verunreinigungen.

In einer bevorzugten Ausführungsform beträgt eine Konzentration des ersten Leitsalzes in SO2 zumindest 10⁻⁴ mol/l, insbesondere zumindest 10⁻³ mol/l, insbesondere zumindest 10⁻² mol/l, insbesondere zumindest 10⁻¹ mol/l, insbesondere zumindest 1 mol/l.

Zusätzlich zu dem ersten Leitsalz kann der schwefeldioxidhaltige Elektrolyt in einer bevorzugten Ausführungsform weiterhin ein zweites Leitsalz mit der stöchiometrischen Formel K(AX₄)p und/oder ein weiteres Leitsalz mit der stöchiometrischen Formel K(AOX₂)ₚ umfassen. Das zweite Leitsalz und bzw. oder das dritte Leitsalz sind vorzugsweise in SO₂ gelöst. Für die hier angegebenen abkürzenden Buchstaben K, A, X und p können Elemente gemäß der oben beschriebenen Wahlmöglichkeiten eingesetzt werden. Es ist bevorzugt, aber nicht notwendig, dass dabei für alle verwendeten Leitsalze die gleichen Elemente ausgewählt werden. O steht für Sauerstoff.

Insbesondere ist eine Ausführungsform bevorzugt, in der der schwefeldioxidhaltige Elektrolyt frei ist von Substanzen mit der stöchiometrischen Formel KAX₄, insbesondere frei von LiAlCl₄ ist, wobei die angegebenen abkürzenden Buchstaben K, A und X wiederum Elemente gemäß der oben beschriebenen Elementgruppen sind. Es ist bevorzugt, dass der schwefeldioxidhaltige Elektrolyt frei ist von allen Substanzen, die die stöchiometrische Formel KAX₄ in irgendeiner Kombination von für die abkürzenden Buchstaben oben beschriebenen einsetzbaren Elementen erfüllen. Alternativ ist es bevorzugt, dass der schwefeldioxidhaltige Elektrolyt zumindest frei ist von der Substanz mit der stöchiometrischen Formel KAX₄, die sich durch Einsetzen derjenigen Elemente ergibt, die für das erste Leitsalz gewählt wurden.

Ist doch eine geringe Menge an KAX₄ in dem schwefeldioxidhaltigen Elektrolyten enthalten, so wird diese nach der oben beschriebenen Selbstentladereaktion verbraucht.

Wenn eine Substanz KAX₄, insbesondere LiAlCl₄, nicht in dem Elektrolyten vorhanden ist, findet eine Selbstentladung gemäß der oben beschriebenen Gleichungen oder einer analogen Gleichung, falls die abkürzenden Buchstaben K, A und X nicht für Lithium bzw. Aluminium bzw. Chlor stehen, mit bzw. in dem erfindungsgemäßen Elektrolyten erstaunlicherweise nicht statt. Der Elektrolyt wird damit nicht verbraucht. Weiterhin findet kein Verbrauch von Lithiumionen bzw. Ladungsmenge statt und es bilden sich auch keine schwerlöslichen bzw. ausfallenden Salze. Folglich reicht es auch für den langfristigen Betrieb der Batteriezelle aus, dass diese initial nur mit einer im Vergleich zu herkömmlichen mit SO₂-haltigen Elektrolyten befüllten Batteriezellen signifikant reduzierter Menge an Elektrolyt befüllt wird. Im Vergleich zu herkömmlichen mit SO2-haltigem Elektrolyten befüllten Batteriezellen kann die bei der Produktion der Zelle einzufüllende Elektrolytmenge auf ein Drittel reduziert werden.

Mit dem neuen Elektrolyten findet eine Reaktion nach oben erläuterter Gleichung (Gl. IV) nicht statt. Dadurch kann in vorteilhafter Weise das zusätzliche Einbringen einer Ladungsmenge bzw. einer Menge an Lithiumionen für die Kompensation der Selbstentladung gem. Gleichung (Gl. IV) entfallen. Demzufolge können die Kapazitäten der Elektroden entsprechend angepasster dimensioniert werden. Weiterhin kann die Menge des einzufüllenden Elektrolyten entsprechend verringert werden, da dieser nicht mehr verbraucht wird und schwerlösliche Salze, wie Lithiumchlorid, nicht mehr ausfallen und folglich die Poren der negativen Elektrode nicht mehr verstopfen und damit den Innenwiderstand erhöhen. Die Menge des an den Lade- und Entladevorgängen beteiligten ionenleitenden Elektrolyts bleibt somit über die gesamte Lebensdauer der Batteriezelle nahezu vollständig erhalten. Eine Reduktion der Elektrolytmenge kann insbesondere in der bevorzugten Ausführungsform erreicht werden, in der die positive Elektrode eine Porosität aufweist, die kleiner als 25 %, kleiner als 20%, kleiner als 15% und alternativ insbesondere kleiner als 12 % ist. Alternativ oder zusätzlich dazu ist in einer weiteren Ausführungsform bevorzugt, dass die negative Elektrode eine Porosität aufweist, die kleiner als 25 %, kleiner als 20%, kleiner als 15% und alternativ insbesondere kleiner als 12 % ist.

Eine der verringerten Elektrolytmenge entsprechende Reduzierung der Porosität einer Elektrode kann insbesondere dadurch erreicht werden, dass der jeweiligen Elektrode, die vorzugsweise mit Partikeln mit einem Durchmesser R gebildet ist, anteilig Partikel gleichen Materials aber kleineren Durchmessers, insbesondere R/3, zufügt werden. Dies bewirkt, dass die kleineren Partikel in Zwischenräumen zwischen den größeren Partikeln platziert sind. Neben der geringeren Porosität können derartige Elektroden eine höhere mechanische Stabilität aufweisen.

Die spezifische Energie und die Energiedichte der Batteriezelle können durch die Verwendung des beschriebenen Elektrolyten und bei Verringerung der Porosität von z.B. 30 % auf 12 % von 65 Wh/kg bzw. 200 Wh/l einer herkömmlichen vorgezykelten Batteriezelle auf über 155 Wh/kg bzw. über 470 Wh/l gesteigert werden. Die Nennkapazität für eine prismatische Zelle mit den äußeren Abmessungen von 130 mm x 130 mm x 24,5 mm kann dadurch z.B. von etwa 22 Ah einer herkömmlichen vorgezykelten Batteriezelle auf über 61 Ah steigen.

Die Kapazitätsabnahme über die Anzahl der Zyklen ist durch die Verwendung des erfindungsgemäßen Elektrolyten stark reduziert. Eine Selbstentladung ist dabei derart unterdrückt, dass diese praktisch nicht mehr messbar ist.

Ein weiterer Aspekt der Erfindung betrifft ein Verfahren zur Herstellung eines erfindungsgemäßen schwefeldioxidhaltigen Elektrolyten zur Verwendung in einer Batteriezelle, umfassend zumindest die Herstellung von LiAlSCl₂ gemäß der Reaktionsgleichung

Li₂S + Li⁺ + AlCl₄⁻ → Li⁺ + AlSCl₂⁻ + 2 LiCl, (Gl. V)

wobei die Reaktion in flüssigem SO₂ und vorzugsweise bei einer Temperatur im Bereich von -20°C bis -5°C, insbesondere im Bereich von -15°C bis -7°C, insbesondere bei -10°C, stattfindet. Bei einer derart niedrigen Temperatur und unter normalen Druckverhältnissen ist SO₂ üblicherweise flüssig.

Die durch Gleichung (Gl. V) beschriebene Reaktion wird vorzugsweise durchgeführt durch Zugabe von feinkörnigem, insbesondere wasserfreiem, Li₂S zu in SO2 gelöstem LiAlCl₄, das vorzugsweise währenddessen gerührt wird. Die Reaktion ist exotherm. Vorzugsweise wird Li2S mit einer Stoffmenge zugegeben, die mit der Stoffmenge des vorliegenden LiAlCl₄ äquimolar also identisch ist. Wird mehr Li₂S zugegeben, fällt LiAlS₂ als ein dunkler Niederschlag aus. Wird hingegen weniger Li₂S zugegeben, so ergibt sich eine Mischung von LiAlSCl₂ und LiAlCl₄ Durch die Menge des zugegebenen Lithiumsulfids, Li₂S, kann also das Verhältnis zwischen gelöstem LiAlSCl₂ und gelöstem LiAlCl₄ eingestellt werden. Nach Ablauf der Reaktion wird vorzugsweise das als weißer Niederschlag ausfallende LiCl abfiltriert.

Ein weiterer Aspekt der Erfindung betrifft ein weiteres, alternatives Verfahren zur Herstellung eines erfindungsgemäßen schwefeldioxidhaltigen Elektrolyten zur Verwendung in einer Batteriezelle, umfassend zumindest die Herstellung von LiAlSCl₂ gemäß der Reaktionsgleichung

Li₂S + AlCl₃ -> Li⁺ + AlSCl₂⁻ + LiCl, (Gl. VI)

wobei die Reaktion in flüssigem SO₂ und vorzugsweise bei einer Temperatur im Bereich von -20°C bis -5°C, insbesondere im Bereich von -15°C bis -7°C, insbesondere bei -10°C, stattfindet.

Die Herstellung des schwefeldioxidhaltigen Elektrolyten kann auch bei Temperaturen oberhalb von -10°C stattfinden, sofern das SO₂ entsprechend mit Druck beaufschlagt wird, da SO₂ bei Temperaturen von mehr als -10°C bei normalem Druck, d.h. beim Druck der Standardatmosphäre von 1013,25hPa, nicht mehr flüssig ist. Da eine höhere Temperatur die Reaktionsgeschwindigkeit nach Gleichung V bzw. unten VI erhöht, kann bei gleichzeitiger Beaufschlagung der Reaktanden mit Druck die Reaktion schneller ablaufen, wobei der Druck so hoch sein muss, dass das SO₂ bei jeweils gegebener Temperatur flüssig bleibt. Auf diese Weise kann die Herstellung des Elektrolyten schneller durchgeführt werden. Insbesondere kann die Herstellung des Elektrolyten, also die Reaktion nach Gleichung V oder VI, bei Temperaturen zwischen 0°Celsius und 50°Celsius oder mehr und bei einem jeweils entsprechend geeigneten ausreichend hohen Druck durchgeführt werden. So kann die Herstellung insbesondere bei einer Temperatur von 0°C und einem Druck von mehr als 1,8 Bar, bei einer Temperatur von 20°C und einem Druck von mehr als 3,6 Bar, bei einer Temperatur von 40°C und einem Druck von mehr als 6 Bar, bei einer Temperatur von 60°C und einem Druck von mehr als 10 Bar oder bei noch höheren Temperaturen und einem geeignet hohen Druck durchgeführt werden. Dabei sind die hier angegebenen Verhältnisse von Temperaturen und jeweiligen Drücken als Richtwerte zu verstehen, wobei der Fachmann weiß, dass die Verhältnisse auch von weiteren Bestandteilen abhängen.

Die durch Gleichung (Gl. VI) beschriebene Reaktion wird vorzugsweise durchgeführt durch Zugabe von feinkörnigem, insbesondere wasserfreiem, Li₂S zu einer Suspension von AlCl₃ in flüssigem SO₂, die vorzugsweise währenddessen gerührt wird. Vorzugsweise wird Li₂S mit einer Stoffmenge zugegeben, die höchstens gleich der Stoffmenge des vorliegenden AlCl₃ ist, insbesondere genau gleich der Stoffmenge des vorliegenden AlCl₃ ist. Nach Ablauf der Reaktion wird vorzugsweise das als weißer Niederschlag ausfallende LiCl abfiltriert.

Anstelle des Abfiltrierens des LiCl kann auch AlCl₃ zugegeben werden. Dadurch entsteht als Reaktionsprodukt LiAlCl₄, wobei über die Menge des zugegebenen AlCl₃ ein Verhältnis aus gelöstem LiAlSCl₂ und gelöstem LiAlCl₄ einstellbar ist.

## Patentansprüche

1. Schwefeldioxidhaltiger Elektrolyt für eine wiederaufladbare nichtwässrige elektrochemische Batteriezelle umfassend zumindest ein erstes Leitsalz mit der stöchiometrischen Formel K(ASX₂)ₚ, wobei K für ein Kation aus der Gruppe der Alkalimetalle mit p=1, der Erdalkalimetalle mit p=2 oder der Zinkgruppe mit p=2 steht, wobei A für ein Element aus der dritten Hauptgruppe steht, S für Schwefel steht, X für ein Halogen steht, und wobei das erste Leitsalz in Schwefeldioxid gelöst ist, und
wobei der Elektrolyt im Wesentlichen frei von Thionylchlorid, Chlor und Sulfurylchlorid ist.

2. Elektrolyt nach Anspruch 1, wobei eine Konzentration des ersten Leitsalzes in dem Schwefeldioxid zumindest 10⁻⁴ mol/l beträgt.

3. Elektrolyt nach einem der vorstehenden Ansprüche, wobei das erste Leitsalz die stöchiometrische Formel LiAlSCl₂ hat.

4. Elektrolyt nach einem der vorhergehenden Ansprüche, wobei dieser ein zweites Leitsalz mit der stöchiometrischen Formel K(AX₄)p umfasst, und wobei das zweite Leitsalz in dem Schwefeldioxid gelöst ist.

5. Elektrolyt nach einem der vorhergehenden Ansprüche, wobei dieser ein weiteres Leitsalz mit der stöchiometrischen Formel K(AOX₂)ₚ umfasst, und wobei das weitere Leitsalz in dem Schwefeldioxid gelöst ist.

6. Elektrolyt nach einem der vorhergehenden Ansprüche, wobei dieser frei ist von Substanzen mit der stöchiometrischen Formel KAX₄.

7. Wiederaufladbare nichtwässrige elektrochemische Batteriezelle, umfassend eine negative und eine positive Elektrode und einen Elektrolyten nach einem der Ansprüche 1-6.

8. Wiederaufladbare nichtwässrige elektrochemische Batteriezelle, umfassend einen Elektrolyten nach Anspruch 7, und wobei die positive Elektrode eine Porosität kleiner als 25 %, kleiner als 20%, kleiner als 15% und alternativ insbesondere kleiner als 12 % aufweist.

9. Wiederaufladbare nichtwässrige elektrochemische Batteriezelle, umfassend einen Elektrolyten nach einem der Ansprüche 7 oder 8, und wobei die negative Elektrode eine Porosität kleiner als 25 %, kleiner als 20%, kleiner als 15% oder insbesondere kleiner als 12 % aufweist.

10. Verfahren zur Herstellung eines schwefeldioxidhaltigen Elektrolyten nach Anspruch 1 für eine wiederaufladbare elektrochemische Batteriezelle, umfassend zumindest die Herstellung von LiAlSCl₂ gemäß der Reaktionsgleichung
Li₂S + LiAlCl₄ → LiAlSCl₂ + 2 LiCl,
wobei die Reaktion in flüssigem Schwefeldioxid stattfindet.

11. Verfahren zur Herstellung eines schwefeldioxidhaltigen Elektrolyten zur Verwendung in einer Batteriezelle, umfassend zumindest die Herstellung von LiAlSCl₂ gemäß der Reaktionsgleichung
Li2S + AlCl₃ → LiAlSCl₂ + LiCl,
wobei die Reaktion in flüssigem SO₂ stattfindet.

12. Verfahren nach Anspruch 10 oder 11, wobei das Verfahren bei einer Temperatur von 10 °C bis 50 °C und einem Druck, bei dem das SO₂ bei diesen Temperaturen flüssig bleibt, erfolgt.

13. Verfahren nach Anspruch 10 oder 11, wobei das Verfahren bei einer Temperatur von mehr als 50°C und einem Druck, bei dem das SO₂ bei dieser Temperatur flüssig bleibt, erfolgt.

## Claims

1. Sulfur dioxide-containing electrolyte for a rechargeable non-aqueous electrochemical battery cell, the electrolyte comprising at least one first conducting salt having the stoichiometric formula K(ASX₂)ₚ, where K represents a cation from the group of alkali metals with p=1, the group of alkaline earth metals with p=2 or the zinc group with p=2, where A represents an element from the third main group, S represents sulfur and X represents a halogen, and wherein the first conducting salt is dissolved in sulfur dioxide, and wherein the electrolyte is substantially free of thionyl chloride, chlorine and sulfuryl chloride.

2. Electrolyte according to claim 1, wherein a concentration of the first conducting salt in the sulfur dioxide is at least 10⁻⁴ mol/l.

3. Electrolyte according to one of the preceding claims, wherein the first conducting salt has the stochiometric formula LiAlSCl₂.

4. Electrolyte according to one of the preceding claims, wherein the electrolyte comprises a second conducting salt having the stoichiometric formula K(AX₄)p, and wherein the second conducting salt is dissolved in the sulfur dioxide.

5. Electrolyte according to one of the preceding claims, wherein the electrolyte comprises a further conducting salt having the stoichiometric formula K(AOX₂)ₚ, and wherein the further conducting salt is dissolved in the sulfur dioxide.

6. Electrolyte according to one of the preceding claims, wherein the electrolyte is free of substances having the stoichiometric formula KAX₄.

7. Rechargeable non-aqueous electrochemical battery cell comprising a negative and a positive electrode and an electrolyte according to one of claims 1-6.

8. Rechargeable non-aqueous electrochemical battery cell comprising an electrolyte according to claim 7, and wherein the positive electrode has a porosity of less than 25%, less than 20%, less than 15%, or alternatively in particular less than 12%.

9. Rechargeable non-aqueous electrochemical battery cell comprising an electrolyte according to one of claims 7 or 8, and wherein the negative electrode has a porosity of less than 25%, less than 20%, less than 15%, or in particular less than 12%.

10. Method for producing a sulfur dioxide-containing electrolyte according to claim 1 for a rechargeable electrochemical battery cell, comprising at least the production of LiAlSCl₂ according to the reaction equation
Li₂S + LiAlCl₄ → LiAISCI2 + 2 LiCl,
wherein the reaction takes place in liquid sulfur dioxide.

11. Method for producing a sulfur dioxide-containing electrolyte for use in a battery cell, comprising at least the production of LiAlSCl₂ according to the reaction equation
Li₂S + AlCl₃ → LiAlSCl₂ + LiCl,
wherein the reaction takes place in liquid SO₂.

12. Method according to claim 10 or 11, wherein the method is carried out at a temperature of 10°C to 50°C and a pressure at which the SO₂ remains liquid at these temperatures.

13. Method according to claim 10 or 11, wherein the method is carried out at a temperature of more than 50°C and a pressure at which the SO₂ remains liquid at this temperature.

## Revendications

1. Électrolyte contenant du dioxyde de soufre pour une cellule de batterie électrochimique non aqueuse rechargeable, comprenant au moins un premier sel conducteur de formule stoechiométrique K(ASX₂)_{P}, dans laquelle K représente un cation du groupe des métaux alcalins avec p = 1, métaux alcalino-terreux avec p = 2 ou du groupe zinc avec p = 2, A représente un élément du troisième groupe principal, S représente le soufre et X représente un halogène, et dans lequel le premier sel conducteur est dissous dans du dioxyde de soufre, et
dans lequel l'électrolyte est essentiellement exempt de chlorure de thionyle, de chlore et de chlorure de sulfuryle.

2. Électrolyte selon la revendication 1, dans lequel une concentration du premier sel conducteur dans le dioxyde de soufre est d'au moins 10⁻⁴ mol/l.

3. Électrolyte selon l'une quelconque des revendications précédentes, dans lequel le premier sel conducteur est de formule stoechiométrique LiAlSCl₂.

4. Électrolyte selon l'une quelconque des revendications précédentes, dans lequel celui-ci comprend un second sel conducteur de formule stoechiométrique K(AX₄)_{P}, et dans lequel le second sel conducteur est dissous dans le dioxyde de soufre.

5. Électrolyte selon l'une quelconque des revendications précédentes, dans lequel celui-ci comprend un autre sel conducteur de formule stoechiométrique K(AOX₂)_{P}, et dans lequel l'autre sel conducteur est dissous dans le dioxyde de soufre.

6. Électrolyte selon l'une quelconque des revendications précédentes, dans lequel celui-ci est exempt de substances de formule stoechiométrique KAX₄.

7. Cellule de batterie électrochimique non aqueuse rechargeable, comprenant une électrode négative et une électrode positive et un électrolyte selon l'une quelconque des revendications 1 à 6.

8. Cellule de batterie électrochimique non aqueuse rechargeable, comprenant un électrolyte selon la revendication 7, et dans laquelle l'électrode positive présente une porosité inférieure à 25 %, inférieure à 20 %, inférieure à 15 % et, alternativement, en particulier inférieure à 12 %.

9. Cellule de batterie électrochimique non aqueuse rechargeable, comprenant un électrolyte selon l'une quelconque des revendications 7 ou 8, et dans laquelle l'électrode négative présente une porosité inférieure à 25 %, inférieure à 20 %, inférieure à 15 % ou en particulier inférieure à 12 %.

10. Procédé de production d'un électrolyte contenant du dioxyde de soufre selon la revendication 1 pour une cellule de batterie électrochimique rechargeable, comprenant au moins la production de LiAlSCl₂ selon l'équation de réaction
Li₂S + LiAlCl₄ → LiAlSCl₂ + 2 LiCl,
dans laquelle la réaction a lieu dans du dioxyde de soufre liquide.

11. Procédé de production d'un électrolyte contenant du dioxyde de soufre destiné à être utilisé dans une cellule de batterie, comprenant au moins la production de LiAlSCl₂ selon l'équation de réaction
Li₂S + AlCl₃ → LiAlSCl₂ + LiCl,
dans laquelle la réaction a lieu dans du SO₂ liquide.

12. Procédé selon la revendication 10 ou 11, dans lequel le procédé est effectué à une température de 10 à 50 °C et à une pression à laquelle le SO₂ reste liquide à ces températures.

13. Procédé selon la revendication 10 ou 11, dans lequel le procédé est effectué à une température supérieure à 50 °C et à une pression à laquelle le SO₂ reste liquide à cette température.
